# EUROPEAN PATENT APPLICATION

(11) **EP 4 710 787 A1**
(43) Date of publication of application: **18.03.2026**
(21) Application number: 24802983.7
(22) Date of filing: 07.05.2024
(51) Int. Cl.: A24F 40/40

(54) **CONTROL METHOD FOR AEROSOL GENERATION APPARATUS, AND AEROSOL GENERATION APPARATUS**

(30) Priority: 11.05.2023 CN 202310532565
(71) Applicant: Shenzhen First Union Technology Co., Ltd., Shenzhen, Guangdong 518000 (CN)
(72) Inventor: FENG, Runqiang, Shenzhen, Guangdong 518000 (CN); YU, Peixia, Shenzhen, Guangdong 518000 (CN); FANG, Xiaogang, Shenzhen, Guangdong 518000 (CN); HU, Ruilong, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2024/091507
(87) International publication number: WO 2024/230703

(57) **Abstract**

The present application provides a control method for an aerosol generation apparatus, and an aerosol generation apparatus. The method comprises: acquiring an ambient temperature in the proximity of a battery cell; according to the ambient temperature, determining output power, which is provided for a heating assembly, of the battery cell; and outputting the output power to the heating assembly, so that the heating assembly reaches a preset preheating temperature, and then the electric capacity of the battery cell can maintain a preset number of aerosol products under the output power. The present application adjusts, according to the ambient temperature in the proximity of the battery cell, the output power outputted by the battery cell to the heating assembly, optimizes the output power of the battery cell according to the ambient temperature, and solves the technical problem that the output power of the battery cell is prone to being affected by the temperature.

## Description

### CROSS-REFERENCE TO RELATED APPLICATIONS

This application claims priority to Chinese Patent Application No. 202310532565.3, filed with the China National Intellectual Property Administration on May 11, 2023 and entitled "CONTROL METHOD FOR AEROSOL GENERATING DEVICE, AND AEROSOL GENERATING DEVICE", which is incorporated herein by reference in its entirety.

### TECHNICAL FIELD

This application relates to the field of aerosol technologies, and specifically, to a control method for an aerosol generating device, and an aerosol generating device.

### BACKGROUND

Traditional tobacco products (such as tobacco and cigars) burn tobacco during use to produce tobacco smoke. In the existing technology, these traditional tobacco products may be replaced by products that release a compound by heating without burning. For example, an aerosol generating device. These apparatuses devices generally include a heating assembly, and the heating assembly is configured to heat a cigarette-shaped aerosol product inserted in the device, so that some active substances in the aerosol product volatilize when heated to generate an aerosol.

Currently, the foregoing aerosol generating device is usually powered by using a battery. Discharge performance of the battery is greatly affected by an ambient temperature. Consequently, a number of the cigarette-shaped aerosol products that can be maintained is different when the ambient temperature is different.

### SUMMARY

A main objective of this application is to provide a control method for an aerosol generating device, and an aerosol generating device, to resolve a problem that output power of a battery cell is susceptible to a temperature.

To achieve the foregoing objective, according to an aspect of this application, a control method for an aerosol generating device is provided, applied to a controller of the aerosol generating device, where the aerosol generating device further includes a battery cell and a heating assembly, the controller is electrically connected to the heating assembly and the battery cell, and the method includes: acquiring an ambient temperature in the proximity of the battery cell; determining, based on the ambient temperature, output power provided by the battery cell for the heating assembly; and outputting the output power to the heating assembly, so that the heating assembly reaches a preset preheating temperature, and an electric capacity of the battery cell can maintain a preset number of aerosol products under the output power.

Optionally, the determining, based on the ambient temperature, output power provided by the battery cell for the heating assembly includes: determining a temperature interval to which the ambient temperature belongs; and determining, based on the belonged temperature interval, output power corresponding to the temperature interval.

Optionally, the determining, based on the belonged temperature interval, output power corresponding to the temperature interval includes: determining, when the belonged temperature interval is a first ambient temperature interval, that the output power corresponding to the temperature interval is first output power; and determining, when the belonged temperature interval is a second ambient temperature interval, the output power corresponding to the temperature interval is second output power, where a smallest value of the first ambient temperature interval is greater than a largest value of the second ambient temperature interval, and the first output power is greater than the second output power.

Optionally, the outputting the output power to the heating assembly, so that the heating assembly reaches a preset preheating temperature includes: providing a corresponding voltage or duty cycle to the heating assembly based on the output power, so that the heating assembly reaches the preset preheating temperature.

Optionally, the method further includes: acquiring a current voltage of the battery cell; and the determining, based on the ambient temperature, output power provided by the battery cell for the heating assembly includes: determining, based on the ambient temperature and the current voltage, the output power provided by the battery cell for the heating assembly.

Optionally, the determining, based on the ambient temperature and the current voltage, the output power provided by the battery cell for the heating assembly includes: determining a temperature interval to which the ambient temperature belongs; determining a voltage interval to which the current voltage belongs; and determining corresponding output power based on the belonged temperature interval and voltage interval.

Optionally, the determining corresponding output power based on the belonged temperature interval and voltage interval includes: providing third output power for the heating assembly when the belonged temperature interval is a second ambient temperature interval and the belonged voltage interval is a first voltage interval; and providing fourth output power for the heating assembly when the belonged temperature interval is a second ambient temperature interval and the belonged voltage interval is a second voltage interval, where a smallest value of the first voltage interval is greater than a largest value of the second voltage interval, and the third output power is greater than the fourth output power.

Optionally, the determining corresponding output power based on the belonged temperature interval and voltage interval includes: providing fifth output power for the heating assembly when the belonged temperature interval is a second ambient temperature interval and the belonged voltage interval is a first voltage interval; and providing sixth output power for the heating assembly when the belonged temperature interval is a third ambient temperature interval and the belonged voltage interval is a first voltage interval, where a smallest value of the second ambient temperature interval is greater than a largest value of the third ambient temperature interval, and the fifth output power is greater than the sixth output power.

According to another aspect of this application, an aerosol generating device is provided, including: a heating assembly, configured to heat an aerosol generating substrate to generate an aerosol; a battery cell; a temperature sensor, configured to detect a temperature of the heating assembly; and a controller, electrically connected to the battery cell and the heating assembly, and configured to perform any one of the control methods for an aerosol generating device.

By applying the technical solution of this application, the ambient temperature in the proximity of the battery cell is acquired; the output power provided by the battery cell for the heating assembly is determined based on the ambient temperature; and finally, the output power is output to the heating assembly, so that the heating assembly reaches the preset preheating temperature, and the electric capacity of the battery cell can maintain the preset number of aerosol products under the output power. In this application, the output power output by the battery cell to the heating assembly is adjusted based on the ambient temperature in the proximity of the battery cell, the output power of the battery cell is optimized for the ambient temperature, and a problem that the output power of the battery cell is susceptible to a temperature is resolved.

### BRIEF DESCRIPTION OF THE DRAWINGS

The accompanying drawings forming a part of this application are used to provide further understanding of this application. The exemplary embodiments of this application and the descriptions thereof are used to explain this application, and do not constitute an improper limitation on this application. In the accompanying drawings:
FIG. 1 is a block diagram of a hardware structure of an aerosol generating device that performs a control method for an aerosol generating device according to an embodiment of this application;
FIG. 2 is a block diagram of another hardware structure of an aerosol generating device that performs a control method for an aerosol generating device according to an embodiment of this application;
FIG. 3 is a schematic flowchart of a control method for an aerosol generating device according to an embodiment of this application; and
FIG. 4 is a block diagram of a structure of a controlling device of an aerosol generating device according to an embodiment of this application.

The foregoing accompanying drawings include the following reference numerals:
10: battery cell; 20: mainboard; 30: heating assembly; 40: cavity; 50: coil; 100: aerosol generating device; and 200: aerosol product.

### DETAILED DESCRIPTION

It should be noted that embodiments in this application and features in embodiments may be combined in the case of no conflict. The following describes this application in detail with reference to the accompanying drawings and embodiments.

To make a person skilled in the art better understand the solutions of this application, the following clearly and completely describes the technical solutions of embodiments of this application with reference to the accompanying drawings in embodiments of this application. Apparently, the described embodiments are merely some rather than all of embodiments of this application. All other embodiments obtained by a person of ordinary skill in the art based on embodiments of this application without creative efforts shall fall within the protection scope of this application.

It should be noted that in the specification, claims, and accompanying drawings of this application, the terms "first", "second", and the like are intended to distinguish between similar objects but do not necessarily indicate a specific order or sequence. It should be understood that data used in such a way are interchangeable in appropriate circumstances, to describe embodiments of this application herein. In addition, the terms "include", "have", and any other variant thereof are intended to cover a non-exclusive inclusion. For example, a process, method, system, product, or device that includes a series of steps or units is not necessarily limited to those steps or units that are expressly listed, but may include other steps or units that are not expressly listed or are inherent to the process, method, product, or device.

As described in the background, an aerosol generating device is usually powered by using a battery. Discharge performance of the battery is greatly affected by an ambient temperature. Consequently, a number of the cigarette-shaped aerosol products that can be maintained is different when the ambient temperature is different. To resolve a problem in the existing technology, embodiments of this application provide a control method for an aerosol generating device, and an aerosol generating device.

The following clearly and completely describes the technical solutions of embodiments of the present invention with reference to the accompanying drawings in embodiments of the present invention.

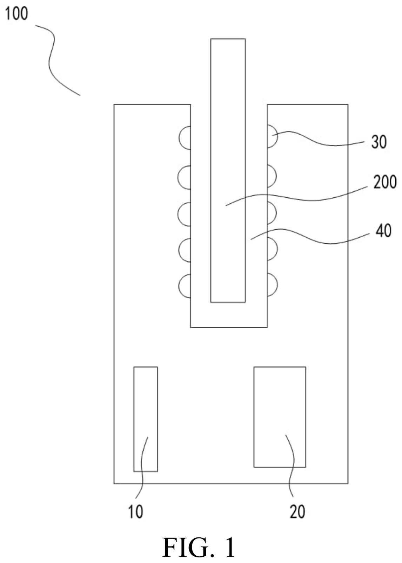

FIG. 1 is a block diagram of a hardware structure of an aerosol generating device that performs a control method for an aerosol generating device according to an embodiment of the present invention. An aerosol generating device 100 includes a battery cell 10, a mainboard 20, and a heating assembly 30. A controller of the aerosol generating device 100 is arranged the on mainboard 20. The battery cell 10 and the heating assembly 30 are electrically connected to the controller, so that the controller may control the battery cell 10 to provide electric energy to the heating assembly 30. The aerosol generating device 100 is further provided with a cavity 40 extending in a longitudinal direction. The cavity 40 is configured to accommodate a cigarette-shaped aerosol product 200 used in combination with the aerosol generating device 100. The heating assembly 30 is attached to an outer wall of the cavity 40, to heat the aerosol product 200 in the cavity 40. Some active substances filled in the aerosol product 200 are heated and volatilize, so that an aerosol is generated. A user may inhale the aerosol when using the aerosol product 200.

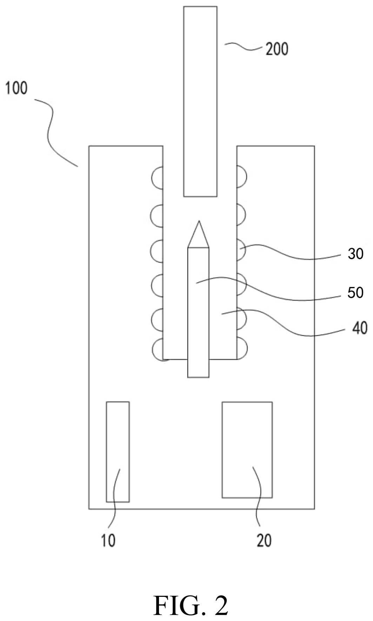

Alternatively, in some embodiments, FIG. 2 is a block diagram of another hardware structure of an aerosol generating device that performs a control method for an aerosol generating device according to an embodiment of the present invention. An aerosol generating device 100 may alternatively heat an aerosol product 200 through electromagnetic induction. At least a part of a heating assembly 30 extends into a cavity 40, and an end portion of the heating assembly 30 that extends into the cavity 40 is formed to be in a pin shape or a sheet shape, so that the heating assembly 30 is smoothly inserted into the aerosol product 200 for heating. A coil 50 is wrapped around an outer wall of the cavity 40. An alternating current is introduced into the coil 50 by a battery cell 10. The coil 50 generates a changing magnetic field under an effect of the alternating current. The changing magnetic field penetrates the heating assembly 30, so that the heating assembly 30 induces an eddy current. The heating assembly 30 generates heat under an eddy current effect and a magnetic hysteresis effect, to heat the aerosol product 200. The aerosol generating device 100 usually has a preheating stage and an inhaling stage. In the preheating stage, the battery cell 10 undergoes high-power discharge to the heating assembly 30, so that the heating assembly 30 heats the aerosol product 200 rapidly to a preset temperature, and an aerosol can be generated when a user inhales. In the inhaling stage, a temperature of the aerosol product 200 is maintained under low heating power during inhaling of the user, to ensure that the aerosol can be generated for the user in the entire inhaling process. In the preheating stage, power provided by the battery cell 10 for the heating assembly 30 may be referred to as preheating power.

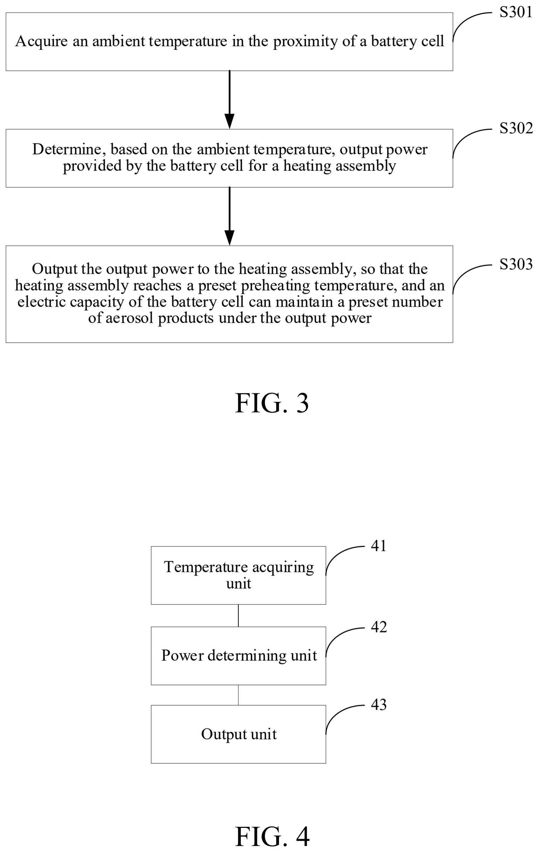

A control method for an aerosol generating device in an embodiment of this application is applied to a controller of the aerosol generating device, where the aerosol generating device includes the foregoing battery cell and heating assembly, the controller is electrically connected to the heating assembly and the battery cell. FIG. 3 is a flowchart of a control method for an aerosol generating device according to this embodiment of this application. FIG. 1 and FIG. 2 are block diagrams of a hardware structure of an aerosol generating device that performs a control method for an aerosol generating device according to this embodiment of the present invention.

As shown in FIG. 1 to FIG. 3, the method includes:
Step S301: Acquire an ambient temperature in the proximity of a battery cell.

Specifically, the battery cell in a cavity of an aerosol generating device may be a lithium battery, and a thermistor or another dedicated temperature detection assembly may be configured to acquire a measure of the ambient temperature in the proximity of the battery cell. Further, the ambient temperature is acquired by a temperature detection assembly in real time. The temperature detection assembly may be a thermocouple temperature sensor, a resistance temperature sensor, an infrared temperature sensor, or the like. After the aerosol generating device is turned on, the temperature detection assembly detects a temperature of an environment in which the aerosol generating device is located, to acquire an analog voltage of a temperature detection end, and calculates the analog voltage of the temperature detection end to acquire the ambient temperature. The temperature detection assembly should detect the ambient temperature at a high frequency, to ensure accuracy and timeliness of the ambient temperature. Preferably, detection is performed at a frequency from once per minute to five times per minute. Through high-frequency temperature detection, a change in the ambient temperature in the proximity of the battery cell can be found in time, so that corresponding adjustment can be made in time.

In this embodiment, the ambient temperature may be an average of a plurality of temperatures acquired by the temperature detection assembly in real time. Two, three, four or more measurement results may be used for calculation herein. To calculate the average, an arithmetic sequence or a geometric sequence may be used to reduce a weight of each continuous measurement. In a preferred embodiment, a weighted average is used, and a current measured ambient temperature and a previous weighted average are taken into account to calculate the weighted average. A weight of a current measurement result approximately ranges from 10% to 50%, and correspondingly, the previous weighted average has a weight approximately ranging from 90% to 50%.

Step S302: Determine, based on the ambient temperature, output power provided by the battery cell for a heating assembly.

Step S303: Output the output power to the heating assembly, so that the heating assembly reaches a preset preheating temperature, and an electric capacity of the battery cell can maintain a preset number of aerosol products under the output power.

Specifically, because a temperature needs to be rapidly increased to the preheating temperature in a preheating stage, preheating power in the preheating stage is usually high, and in this case, the battery cell 10 needs to provide high output power for preheating. In a case in which the battery cell 10 has high output power, when the aerosol generating device 100 is used in a low-temperature environment (for example, when used in winter), a discharge capacity of the battery cell 10 decreases sharply due to high power output by the battery cell 10; or when the aerosol generating device 100 is used in a high-temperature environment (for example, when used in summer), a discharge capacity of the battery cell 10 decreases slowly. Consequently, a number of aerosol products that the battery cell 10 can maintain to heat in the low-temperature environment is obviously less than a number of aerosol products that the battery cell 10 can maintain to heat in the high-temperature environment.

For example, in an environment of 30°C, the discharge capacity of the battery cell 10 losses slowly, and the battery cell 10 can maintain to heat 10 aerosol products when fully charged. However, in an environment of 0°C, if the battery cell 10 provides same output power for preheating, the discharge capacity of the battery cell 10 decreases sharply, and a loss speed of the discharge capacity of the battery cell 10 is greater than a loss speed in the environment of 30°C. Consequently, in the environment of 0°C, a number of aerosol products that the battery cell 10 can maintain to heat when fully charged may be less than 5. In other words, in the low-temperature environment and the high-temperature environment, when the battery cell 10 preheats under same output power, large difference may exist in the number of aerosol products that can be maintained.

Therefore, the ambient temperature around the battery cell 10 is acquired through the temperature detection assembly in step S301, to determine, based on the acquired ambient temperature, appropriate output power provided by the battery cell 10 for the heating assembly 30. The output power is used to preheat an aerosol product to heat the aerosol product to the preheating temperature. In addition, the output power avoids large difference, due to an excessively rapid decrease in the discharge capacity of the battery cell 10, in the number of aerosol products that the battery cell 10 can maintain in the high-temperature environment and the low-temperature environment.

Specifically, in an embodiment, when the ambient temperature acquired in step S301 is low, the output power of the battery cell 10 may be decreased, to decrease the preheating power in the preheating stage, and duration of the preheating stage is correspondingly prolonged, so that the aerosol product reaches the preheating temperature. In this case, the output power of the battery cell 10 is decreased, so that a sharp decrease in the discharge capacity of the battery cell 10 can be avoided. When the ambient temperature acquired in step S301 is high, the output power of the battery cell 10 may be increased, to increase the preheating power in the preheating stage, and duration of the preheating stage is correspondingly shortened, to heat the aerosol product rapidly to the preheating temperature. Because the ambient temperature is high in this case, even if the preheating power is high, the discharge capacity of the battery cell 10 does not sharply decrease.

As shown in Table 1, when the ambient temperature is 0°C, 5°C, or 10°C, the output power of the battery cell 10 is less than the output power when the ambient temperature is 30°C, so that the preheating power of the aerosol generating device at 0°C, 5°C, or 10°C is less than the preheating power at 30°C.

In view of the above, embodiments of this application provide a control method for an aerosol generating device. To be specific, an ambient temperature in the proximity of a battery cell is acquired; output power provided by the battery cell for a heating assembly is determined based on the ambient temperature; and finally, the output power is output to the heating assembly, so that the heating assembly reaches a preset preheating temperature, and an electric capacity of the battery cell can maintain a preset number of aerosol products under the output power. In this application, the output power output by the battery cell to the heating assembly is adjusted based on the ambient temperature in the proximity of the battery cell, the output power of the battery cell is optimized for the ambient temperature, and a technical problem of large difference in the number of aerosol products that the aerosol generating device can maintain in a low-temperature environment and a high-temperature environment is resolved. This resolves a problem that the output power of the battery cell is susceptible to a temperature.

In a possible implementation, that output power provided by the battery cell for a heating assembly is determined based on the ambient temperature includes the following steps:
Step S401: Determine a temperature interval to which the ambient temperature belongs.

Step S402: Determine, based on the belonged temperature interval, output power corresponding to the temperature interval.

Because the ambient temperature is usually unstable, for ease of control, the ambient temperature may be divided into a plurality of temperature intervals. Output power is set for each temperature interval, and the output power is used to preheat the aerosol product. Based on different temperature intervals, the output power may be partially or completely used for preheating.

In an embodiment, a correspondence between the ambient temperature and the output power may be shown in Table 1. It is especially noted that the correspondence in the table is merely used as an example, and is not intended to limit the protection scope of this application.

**Table 1 Correspondence between the ambient temperature and the output power**

| Ambient temperature | Output power | Preheating power proportion |
|---|---|---|
| 0°C | 20 W | 57% |
| 5°C | 25 W | 71% |
| 10°C | 30 W | 86% |
| 15°C and above | 35 W | 100% |

For example, as shown in Table 1, four temperature intervals may be obtained through division: 0°C ≤ t < 5°C, 5°C ≤ t < 10°C, 10°C ≤ t < 15°C, and 15°C and above. In the temperature interval of 0°C ≤ t < 5°C, the output power of the battery cell is 20 W, but preheating power during preheating is only 57% of the output power. In the temperature interval of 5°C ≤ t < 10°C, the output power of the battery cell is 25 W, and preheating power during preheating may be 71% of the output power. When the acquired ambient temperature is at the interval of 10°C ≤ t < 15°C, the output power of the battery cell is 30 W, and preheating power during preheating is 86% of the output power. When the acquired ambient temperature is at the interval of 15°C and above, the output power of the battery cell is 35 W, and the output power may be entirely used for preheating, that is, preheating power is 100% of the output power.

By setting a plurality of temperature intervals, when the acquired ambient temperature falls within a temperature interval, output power and a preheating power proportion corresponding to the temperature interval are directly acquired, to effectively improve efficiency of adjusting the output power based on the ambient temperature. In addition, because the ambient temperature is usually unstable, actual acquired ambient temperature fluctuates. By setting the temperature interval, even if the ambient temperature fluctuates, the ambient temperature falls within the current temperature interval, so that the output power of the battery cell is the same when the ambient temperature does not greatly change, to prevent the output power of the battery cell from changing with fluctuation of the ambient temperature. It is easy to understand that, a number of temperature intervals is not limited to 4. In some other embodiments, temperature intervals may be divided into more, and more temperature intervals indicates finer adjustment of the output power.

In a possible implementation, the determining, based on the belonged temperature interval, output power corresponding to the output power includes: determining, when the belonged temperature interval is a first ambient temperature interval, that the output power corresponding to the temperature interval is first output power; and determining, when the belonged temperature interval is a second ambient temperature interval, the output power corresponding to the temperature interval is second output power, where
a smallest value of the first ambient temperature interval is greater than a largest value of the second ambient temperature interval, and the first output power is greater than the second output power.

Specifically, the manner of determining the output power based on the temperature interval can implement intelligent control on the aerosol generating device, enhance automation of the aerosol generating device, reduce needs for manual intervention, and improve heating efficiency and stability of the aerosol generating device. Different output power is set based on a different temperature interval, high output power is set at a high temperature, and low output power is set at a low temperature, so that the output power of the battery cell of the aerosol generating device in a preheating stage in a low-temperature environment can be optimized, and a number of cigarettes that the aerosol generating device can maintain in the low-temperature environment can be increased.

In a possible implementation, that the output power is output to the heating assembly, so that the heating assembly reaches a preset preheating temperature includes: providing a corresponding voltage or duty cycle to the heating assembly based on the output power, so that the heating assembly reaches the preset preheating temperature.

Specifically, the voltage or the duty cycle of the heating assembly may be adjusted based on the output power, to reach a preheating temperature needed in a preset stage. Precise control on the voltage or the duty cycle of the heating assembly can avoid a case in which the heating assembly is excessively hot or excessively cool, thereby ensuring a preheating effect and quality. The output power of the heating assembly may be adjusted based on the preset preheating temperature, thereby implementing precise preheating temperature control.

In some embodiments, an input voltage and operating time of the heating assembly may be controlled, to adjust the voltage or the duty cycle of the heating assembly based on the output power. Power output of the heating assembly is affected by the input voltage and the operating time. Therefore, the power output of the heating assembly may be adjusted by controlling the voltage or the duty cycle.

The voltage is adjusted to control the power output of the heating assembly. When the input voltage decreases, the power output of the heating assembly decreases accordingly; or when the input voltage increases, the power output of the heating assembly increases accordingly. In this way, the input voltage may be adjusted based on requirements to control the power output of the heating assembly. The duty cycle is adjusted to control the power output of the heating assembly, so that a time ratio of power-on time to power-off time of the heating assembly in particular time is changed. When the duty cycle decreases, the power output of the heating assembly decreases; or when the duty cycle increases, the power output of the heating assembly increases. In this way, the duty cycle may be adjusted based on requirements to control the power output of the heating assembly.

In a specific implementation process, there are a plurality of voltages or duty cycles, and each voltage or duty cycle is associated with the output power of the battery cell. To determine which voltage or duty cycle is to be used, a voltage or a duty cycle associated with the temperature interval to which the ambient temperature of the battery cell belongs is selected based on the output power of the battery cell, so as to determine a final voltage or duty cycle of the heating assembly.

In a possible implementation, the method further includes: acquiring a current voltage of the battery cell; and that output power provided by the battery cell for a heating assembly is determined based on the ambient temperature includes: determining, based on the ambient temperature and the current voltage, the output power provided by the battery cell for the heating assembly.

Specifically, a voltage detection assembly may be used to detect a voltage of a battery in a cavity of a cigarette device, so as to acquire a battery voltage. Changes of the ambient temperature and the battery cell voltage are comprehensively considered, to adjust the output power of the heating assembly more precisely, thereby improving stability and efficiency of a heating effect. In addition, the output power of the battery cell may be automatically adjusted based on the changes of the ambient temperature and the battery cell voltage without manual intervention, thereby improving convenience of using the aerosol generating device.

For example, as shown in Table 2, in an external environment of 0°C, when the voltage detection assembly detects that a voltage at both ends of the battery cell is above 4.0 V, the output power of the battery cell is 30 W; when the voltage detection assembly detects that a voltage at both ends of the battery cell ranges from 3.8 V to 4.0 V, the output power of the battery cell is 25 W; or when the voltage detection assembly detects that a voltage at both ends of the battery cell ranges from 3.0 V to 3.8 V, the output power of the battery cell is 20 W.

In addition, it should be noted that, to further improve efficiency of adjusting the output power, in a same low-temperature environment, a higher voltage at both ends of the battery cell indicates a larger proportion of the preheating power to the output power of the battery cell. For example, as shown in Table 2, in the external environment of 0°C, when the voltage detection assembly detects that the voltage at both ends of the battery cell is above 4.0 V, a preheating power proportion is 86%; when the voltage detection assembly detects that the voltage at both ends of the battery cell ranges from 3.8 V to 4.0 V, a preheating power proportion decreases to 71%; or when the voltage detection assembly detects that the voltage at both ends of the battery cell ranges from 3.0 V to 3.8 V, a preheating power proportion further decreases to 57%.

A correspondence between the ambient temperature, the battery cell voltage, and the output power may be shown in Table 2. It is especially noted that the correspondence in Table 2 is merely used as an example, and is not intended to limit the protection scope of this application.

**Table 2 Correspondence between the ambient temperature, the battery cell voltage, and the output power**

| Ambient temperature | Battery cell voltage | Output power | Preheating power proportion |
|---|---|---|---|
| 0°C | 3.0 V-3.8 V | 20 W | 57% |
| 0°C | 3.8 V-4.0 V | 25 W | 71% |
| 0°C | 4.0 V and above | 30 W | 86% |
| 5°C | 3.0 V-3.8 V | 25 W | 71% |
| 5°C | 3.8 V-4.0 V | 30 W | 86% |
| 5°C | Above 4.0 V | 35 W | 100% |
| 10°C | 3.0 V-3.8 V | 30 W | 86% |
| 10°C | 3.8 V-4.0 V | 35 W | 100% |
| 10°C | Above 4.0 V | 35 W | 100% |
| 15°C and above | 3.0 V-3.8 V | 35 W | 100% |
| 15°C and above | 3.8 V-4.0 V | 35 W | 100% |
| 15°C and above | Above 4.0 V | 35 W | 100% |

In a possible implementation, the determining, based on the ambient temperature and the current voltage, the output power provided by the battery cell for the heating assembly includes: determining a temperature interval to which the ambient temperature belongs; determining a voltage interval to which the current voltage belongs; and determining corresponding output power based on the belonged temperature interval and voltage interval.

Specifically, the output power is determined based on the ambient temperature and the current voltage, so that the aerosol generating device can run in an optimal state during operation in different environments, to improve efficiency, and avoid unnecessary energy consumption, so as to reduce energy consumption and costs, and improve user experience.

For example, as shown in Table 2, four temperature intervals may be obtained through division: 0°C ≤ t < 5°C, 5°C ≤ t < 10°C, 10°C ≤ t < 15°C, and 15°C and above, and three voltage intervals may be obtained through division: 3.0 V ≤ U < 3.8 V, 3.8 V ≤ U < 4.0 V, and 4.0 V and above.

By setting a plurality of temperature intervals and voltage intervals, when the acquired ambient temperature and the battery cell voltage fall within a temperature interval and a voltage interval, output power and a preheating power proportion corresponding to the temperature interval and the voltage interval are directly acquired, to effectively improve efficiency of adjusting the output power based on the ambient temperature and the battery cell voltage. In addition, because the ambient temperature and the battery cell voltage are usually unstable, actual acquired ambient temperature and battery cell voltage fluctuate. To keep the output power of the battery cell constant, when the temperature interval and the battery cell interval are set, even if the ambient temperature and the battery cell voltage fluctuate, the output power of the battery cell can keep the same. This can prevent performance of the output power of the battery cell from being affected by fluctuation of the ambient temperature and the battery cell voltage. It should be noted that a set number of temperature intervals is not limited to four and a set number of battery cell intervals is not limited to three. The set number may be larger based on an actual situation, and a larger set number indicates more accurate adjustment of output power.

In a possible implementation, the determining corresponding output power based on the belonged temperature interval and voltage interval includes: providing third output power for the heating assembly when the belonged temperature interval is a second ambient temperature interval and the belonged voltage interval is a first voltage interval; and providing fourth output power for the heating assembly when the belonged temperature interval is a second ambient temperature interval and the belonged voltage interval is a second voltage interval, where a smallest value of the first voltage interval is greater than a largest value of the second voltage interval, and the third output power is greater than the fourth output power.

Specifically, an interval to which the battery cell voltage belongs may be further determined in a same temperature interval, so that selection of the output power can be refined when the ambient temperature is considered, to select optimal output power more accurately.

For example, as shown in Table 2, when the ambient temperature is in the temperature interval of 5°C ≤ t < 10°C, if the battery cell voltage is in the voltage interval of 3.0 V ≤ U < 3.8 V, the corresponding output power of the battery cell is 25 W, but the preheating power during preheating is only 71% of the output power; if the battery cell voltage is in the voltage interval of 3.8 V ≤ U < 4.0 V, the output power of the battery cell is 30 W, and the preheating power during preheating is 86% of the output power; or if the battery cell voltage is in the voltage interval of 4.0 V and above, the output power of the battery cell is 35 W, and the output power may be entirely used for preheating, that is, the preheating power is 100% of the output power.

An interval to which the battery cell voltage belongs may be further determined in a same temperature interval, so that selection of the output power can be more refined, thereby improving use efficiency of the battery. First, based on data in Table 2, a different output power may be selected when the battery cell is at a different voltage interval, and a preheating power proportion of the output power is also different. This means that, if only the ambient temperature is considered, the optimal output power may not be reached. By considering both the battery cell voltage and the ambient temperature, the output power may be selected more accurately, so that performance of final output power is better.

In addition, charge and use of the battery cell generally have a time limit, and efficiency of the entire process can be improved by implementing more output power in a short time. Selection of appropriate output power can also prevent the battery from generating excessive heat, and prolong life of the battery. Therefore, in actual application, selection of the output power is refined based on a different ambient temperature and battery cell voltage, so that energy of the battery can be used more effectively, and reliability, stability, and a service life can be prolonged.

In a possible implementation, the determining corresponding output power based on the belonged temperature interval and voltage interval includes: providing fifth output power for the heating assembly when the belonged temperature interval is a second ambient temperature interval and the belonged voltage interval is a first voltage interval; and providing sixth output power for the heating assembly when the belonged temperature interval is a third ambient temperature interval and the belonged voltage interval is a first voltage interval, where a smallest value of the second ambient temperature interval is greater than a largest value of the third ambient temperature interval, and the fifth output power is greater than the sixth output power.

Similarly, an interval to which the temperature belongs may be further determined in a same voltage interval of the battery cell, so that selection of the output power can be refined when the battery cell voltage is considered, to select the optimal output power more accurately.

For example, as shown in Table 2, when the battery cell voltage is in the voltage interval of 3.8 V ≤ U < 4.0 V, if the ambient temperature is in the temperature interval of 0°C ≤ t < 5°C, the corresponding output power of the battery cell is 25 W, and the preheating power during preheating is 71% of the output power; if the ambient temperature is in the temperature interval of 5°C ≤ t < 10°C, the output power of the battery cell is 30 W, and the preheating power during preheating is 86% of the output power; if the ambient temperature is in the temperature interval of 10°C ≤ t < 15°C, the output power of the battery cell is 35 W, and the output power may be entirely used for preheating, that is, the preheating power is 100% of the output power; or if the ambient temperature is in the temperature interval of 15°C and above, the output power of the battery cell is 35 W, and the preheating power is also 100% of the output power.

An interval to which the temperature belongs may be further determined in a same voltage interval of the battery cell, to select the optimal output power more accurately, and improve use efficiency of the battery. Specifically, selection of the output power can be refined based on a different temperature interval when the battery cell voltage is considered, to ensure optimal performance of the battery under a current environment condition. Compared with considering only the ambient temperature or considering only the battery cell voltage, considering both the two factors helps make full use of energy and resources of the battery cell, and improve stability and reliability of the battery cell. For example, in Table 2, when the battery cell voltage is in a range of 3.8 V ≤ U < 4.0 V, regardless of an environment of 10°C ≤ t < 15°C or 15°C and above, selected output power is 35 W. This means that, if the output power is selected only based on the temperature, a waste of battery cell resources may be caused.

Based on actual application requirements, in different operating environments, refined power division is performed on the battery cell. This helps improve efficiency and reliability of the battery cell. In addition, proper selection of the output power can further reduce a problem like overheating of the battery cell, to prolong service time of the battery cell. Therefore, refined selection of the output power can not only help improve performance of the battery cell, but also reduce operation costs of the battery cell.

In view of the above, the output power corresponding to the ambient temperature and the battery voltage is directly acquired based on the correspondence between the ambient temperature, the battery voltage, and the output power, and efficiency of acquiring the output power is higher.

An embodiment of this application further provides a controlling device of an aerosol generating device. It should be noted that the controlling device of an aerosol generating device in this embodiment of this application may be configured to perform the control method for an aerosol generating device provided in embodiments of this application. The device is configured to implement embodiments and preferred implementations, and details that have been mentioned are not described again. As used below, the term "module" may be a combination of software and/or hardware that may implement a predetermined function. Although the device described in the following embodiment is preferably implemented by software, implementation by hardware or a combination of software and hardware is also possible and conceived.

The following describes the controlling device of an aerosol generating device according to this embodiment of this application.

FIG. 4 is a block diagram of a structure of a controlling device of an aerosol generating device according to an embodiment of this application. As shown in FIG. 4, the device includes: a temperature acquiring unit 41, a power determining unit 42, and an output unit 43.

The temperature acquiring unit 41 is configured to acquire an ambient temperature in the proximity of a battery cell.

Specifically, the battery cell in a cavity of an aerosol generating device may be a lithium battery. Output power of the battery cell is affected by a temperature, this is because an internal resistance of the battery cell is affected by the temperature. A thermistor or another dedicated temperature detection assembly may be configured to acquire a measure of the ambient temperature in the proximity of the battery cell. Further, the ambient temperature is acquired by a temperature detection assembly in real time. The temperature detection assembly may be a thermocouple temperature sensor, a resistance temperature sensor, an infrared temperature sensor, or the like. After the aerosol generating device is turned on, the temperature detection assembly detects a temperature of an environment in which the aerosol generating device is located, to acquire an analog voltage of a temperature detection end, and calculates the analog voltage of the temperature detection end to acquire the ambient temperature. The temperature detection assembly should detect the ambient temperature at a high frequency, to ensure accuracy and timeliness of the ambient temperature. Preferably, detection is performed at a frequency from once per minute to five times per minute. Through high-frequency temperature detection, a change in the ambient temperature in the proximity of the battery cell can be found in time, so that corresponding adjustment can be made in time.

The power determining unit 42 is configured to determine, based on the ambient temperature, output power provided by the battery cell for a heating assembly.

Specifically, performance of the battery cell changes based on a different ambient temperature. Therefore, the output power that the battery cell can provide to the heating assembly needs to be adjusted based on the ambient temperature, so that the battery cell has longer endurance time after being fully charged. Generally, when the ambient temperature is low, a battery level of the battery cell decreases, and the output power decreases; or when the ambient temperature is high, a battery level of the battery cell increases, and the output power increases accordingly. Therefore, the output power of the battery cell needs to be adjusted based on a change of the ambient temperature, to increase a number of cigarettes that the aerosol generating device can maintain in a low-temperature environment while normal operation of the heating assembly is ensured, and resolve a problem in the existing technology that discharge performance of a battery of the aerosol generating device is greatly affected by the ambient temperature.

The output unit 43 is configured to output the output power to the heating assembly, so that the heating assembly reaches a preset preheating temperature, and an electric capacity of the battery cell can maintain a preset number of aerosol products under the output power.

Specifically, corresponding output power is output to the heating assembly, to ensure that the heating assembly reaches the preset preheating temperature, so as to ensure normal operation of the aerosol generating device, and meet an inhaling requirement of a user. In addition, by controlling the electric capacity of the battery cell, it can be ensured that a number of times of outputting power by the battery cell meets a preset requirement, to prolong service time of the battery cell.

In view of the above, embodiments of this application provide a controlling device of an aerosol generating device, and the device includes: a temperature acquiring unit, a power determining unit, and an output unit. The temperature acquiring unit is configured to acquire an ambient temperature in the proximity of a battery cell. The power determining unit is configured to determine, based on the ambient temperature, output power provided by the battery cell for a heating assembly. The output unit is configured to output the output power to the heating assembly, so that the heating assembly reaches a preset preheating temperature, and an electric capacity of the battery cell can maintain a preset number of aerosol products under the output power. The device adjusts, based on the ambient temperature in the proximity of the battery cell, the output power output by the battery cell to the heating assembly, optimizes the output power of the battery cell for the ambient temperature, and resolves a problem that the output power of the battery cell is susceptible to a temperature.

In a possible implementation, the power determining unit includes: a first temperature interval determining module, and a first output power determining module.

The first temperature interval determining module is configured to determine a temperature interval to which the ambient temperature belongs.

Specifically, the temperature interval may be 0°C ≤ t < 5°C, 5°C ≤ t < 10°C, 10°C ≤ t < 15°C, 15°C and above, and the like. To effectively ensure a service life of the aerosol generating device, in an environment of an extremely low temperature, for example, -10°C, a protection circuit may be configured, to prevent damage to the battery cell due to long-time use in a low-temperature environment. In addition, the temperature interval is set, so that adjustment can be accurately performed based on an acquired ambient temperature, thereby improving adjustment efficiency, and avoiding inaccurate control due to a temperature error. Moreover, a different control policy may be provided based on a different temperature interval, to adapt to a different ambient temperature.

The first output power determining module is configured to determine, based on the belonged temperature interval, output power corresponding to the temperature interval.

Specifically, the output power may be adjusted based on a change of the ambient temperature, to avoid overheating or underheating, so as to prolong a service life of the battery cell, avoid aging or oxidation of the battery cell caused by overheating; and improve heating efficiency, reduce energy waste, and prolong use time of the battery cell within one operation cycle, so that the battery cell has longer endurance time after being fully charged.

In view of the above, based on a correspondence between the temperature interval of the ambient temperature and the output power of the battery cell, the output power of the battery cell corresponding to the ambient temperature can be directly acquired, so that efficiency of acquiring the output power is higher, accurate temperature control and energy saving effects can be achieved, and a service life is prolonged and heating efficiency of the battery cell is improved.

In a possible implementation, the first output power determining module includes: a first output power determining submodule and a second output power determining submodule.

The first output power determining submodule is configured to determine, when the belonged temperature interval is a first ambient temperature interval, that the output power corresponding to the temperature interval is first output power; and the second output power determining submodule is configured to determine, when the belonged temperature interval is a second ambient temperature interval, that the output power corresponding to the temperature interval is second output power, where a smallest value of the first ambient temperature interval is greater than a largest value of the second ambient temperature interval, and the first output power is greater than the second output power.

Specifically, the manner of determining the output power based on the temperature interval can implement intelligent control on the aerosol generating device, enhance automation of the aerosol generating device, reduce needs for manual intervention, and improve heating efficiency and stability of the aerosol generating device. Different output power is set based on a different temperature interval, high output power is set at a high temperature, and low output power is set at a low temperature, so that the output power of the battery cell of the aerosol generating device in a preheating stage in a low-temperature environment can be optimized, and a number of cigarettes that the aerosol generating device can maintain in the low-temperature environment can be increased.

In a possible implementation, the output unit includes: a providing module. The providing module is configured to provide a corresponding voltage or duty cycle to the heating assembly based on the output power, so that the heating assembly reaches the preset preheating temperature.

Specifically, the voltage or the duty cycle of the heating assembly may be adjusted based on the output power, to reach a preheating temperature needed in a preset stage. Precise control on the voltage or the duty cycle of the heating assembly can avoid a case in which the heating assembly is excessively hot or excessively cool, thereby ensuring a preheating effect and quality. The output power of the heating assembly may be adjusted based on the preset preheating temperature, thereby implementing precise preheating temperature control.

In some embodiments, an input voltage and operating time of the heating assembly may be controlled, to adjust the voltage or the duty cycle of the heating assembly based on the output power. Power output of the heating assembly is affected by the input voltage and the operating time. Therefore, the power output of the heating assembly may be adjusted by controlling the voltage or the duty cycle.

The voltage is adjusted to control the power output of the heating assembly. When the input voltage decreases, the power output of the heating assembly decreases accordingly; or when the input voltage increases, the power output of the heating assembly increases accordingly. In this way, the input voltage may be adjusted based on requirements to control the power output of the heating assembly. The duty cycle is adjusted to control the power output of the heating assembly, so that a time ratio of power-on time to power-off time of the heating assembly in particular time changes. When the duty cycle decreases, the power output of the heating assembly decreases; or when the duty cycle increases, the power output of the heating assembly increases. In this way, the duty cycle may be adjusted based on requirements to control the power output of the heating assembly.

In a specific implementation process, there are a plurality of voltages or duty cycles, and each voltage or duty cycle is associated with the output power of the battery cell. To determine which voltage or duty cycle is to be used, a voltage or a duty cycle associated with the temperature interval to which the ambient temperature of the battery cell belongs is selected based on the output power of the battery cell, so as to determine a final voltage or duty cycle of the heating assembly.

In a possible implementation, the device further includes: a voltage acquiring unit and a second output power determining module. The voltage acquiring unit, configured to acquire a current voltage of the battery cell; and the power determining unit further includes: the second output power determining module, where the second output power determining module is configured to determine, based on the ambient temperature and the current voltage, the output power provided by the battery cell for the heating assembly.

Specifically, a voltage detection assembly may be used to detect a voltage of a battery in a cavity of a cigarette device, so as to acquire a battery voltage. Changes of the ambient temperature and the battery cell voltage are comprehensively considered, to adjust the output power of the heating assembly more precisely, thereby improving stability and efficiency of a heating effect. In addition, the output power of the battery cell may be automatically adjusted based on the changes of the ambient temperature and the battery cell voltage without manual intervention, thereby improving convenience of using the aerosol generating device.

In a possible implementation, the second output power determining module includes: a temperature interval determining submodule, a voltage interval determining submodule, and an output power determining submodule. The temperature interval determining submodule is configured to determine a temperature interval to which the ambient temperature belongs; the voltage interval determining submodule is configured to determine a voltage interval to which the current voltage belongs; and the output power determining submodule is configured to determine corresponding output power based on the belonged temperature interval and voltage interval.

Specifically, the output power is determined based on the ambient temperature and the current voltage, so that the aerosol generating device can run in an optimal state during operating in different environments, to improve efficiency, and avoid unnecessary energy consumption, so as to reduce energy consumption and costs, and improve user experience.

In a possible implementation, the output power determining submodule includes: a third output power providing submodule and a fourth output power providing submodule.

The third output power providing submodule is configured to provide third output power for the heating assembly when the belonged temperature interval is a second ambient temperature interval and the belonged voltage interval is a first voltage interval; and the fourth output power providing submodule is configured to provide fourth output power for the heating assembly when the belonged temperature interval is a second ambient temperature interval and the belonged voltage interval is a second voltage interval, where a smallest value of the first voltage interval is greater than a largest value of the second voltage interval, and the third output power is greater than the fourth output power.

Specifically, an interval to which the battery cell voltage belongs may be further determined in a same temperature interval, so that selection of the output power can be refined when the ambient temperature is considered, to select optimal output power more accurately.

In a possible implementation, the output power determining submodule further includes: a fifth output power providing submodule and a sixth output power providing submodule.

The fifth output power providing submodule is configured to provide fifth output power for the heating assembly when the belonged temperature interval is a second ambient temperature interval and the belonged voltage interval is a first voltage interval; and the sixth output power providing submodule is configured to provide sixth output power for the heating assembly when the belonged temperature interval is a third ambient temperature interval and the belonged voltage interval is a first voltage interval, where a smallest value of the second ambient temperature interval is greater than a largest value of the third ambient temperature interval, and the fifth output power is greater than the sixth output power.

Similarly, an interval to which the temperature belongs may be further determined in a same voltage interval of the battery cell, so that selection of the output power can be refined when the battery cell voltage is considered, to select the optimal output power more accurately.

The controlling device of the aerosol generating device includes a processor, and a memory. The temperature acquiring unit, the power determining unit, the output unit, and the like are all stored in the memory as a program unit. The processor executes the program unit stored in the memory to implement a corresponding function. All the modules are located in a same processor; or the modules are located in different processors in any combination.

The processor includes a kernel, and the kernel invokes a corresponding program unit from the memory. One or more kernels may be provided, and a parameter of the kernel is adjusted to resolve the problem that the output power of the battery cell is susceptible to the temperature.

The memory may include a form such as a volatile memory, a random access memory (RAM) and/or a non-volatile memory in a computer readable medium, for example, a read-only memory (ROM) or a flash memory (flash RAM). The memory includes at least one storage chip.

An embodiment of the present invention provides an aerosol generating device, including: a heating assembly, configured to heat an aerosol generating substrate to generate an aerosol; a battery cell; a temperature sensor, configured to detect a temperature of the heating assembly; and a controller, electrically connected to the battery cell and the heating assembly, and configured to perform any one of the control methods for an aerosol generating device. The device adjusts, based on the ambient temperature in the proximity of the battery cell, the output power output by the battery cell to the heating assembly, optimizes the output power of the battery cell for the ambient temperature, and resolves a problem that output power of a battery cell is susceptible to a temperature.

An embodiment of the present invention provides a computer readable storage medium. The computer readable storage medium includes a stored program, where a device in which the computer readable storage medium is located is controlled, when the program runs, to perform a control method for an aerosol generating device.

An embodiment of the present invention provides a processor. The processor is configured to run a program, where a control method for an aerosol generating device is performed when the program runs.

An embodiment of the present invention provides a device. The device includes a processor, a memory, and a program that is stored on the memory and that can run on the processor. The device in this specification may be a server, a PC, a PAD, a mobile phone, or the like. When the processor executes the program, a step of a control method for an aerosol generating device is implemented.

This application further provides a computer program product, applicable to execute, when executed on a data processing device, a program initialized with at least a step of a control method for an aerosol generating device.

Obviously, a person skilled in the art should understand that the modules or steps of the present invention may be implemented by using a general-purpose computing device. The modules or steps may be integrated on a single computing device, or distributed on a network formed by a plurality of computing devices. The modules or steps may be implemented by using program code that can be executed by a computing device, so that the modules or steps may be stored in a storage device and executed by the computing device. In some cases, the shown or described steps may be performed in a sequence different from the sequence herein, or the modules or steps are separately made into each integrated circuit module, or some of the modules or steps are made into a single integrated circuit module for implementation. In this way, the present invention is not limited to any particular combination of hardware and software.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that a device configured to implement functions specified in one or more procedures in the flowcharts and/or one or more blocks in the block diagrams is generated by using instructions executed by the computer or the processor of another programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may further be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, the computing device includes one or more processors (CPU), input/output interfaces, network interfaces, and memories.

The memory may include a form such as a volatile memory, a random access memory (RAM) and/or a non-volatile memory in a computer readable medium, for example, a read-only memory (ROM) or a flash memory (flash RAM). The memory is an example of the computer readable medium.

The computer-readable medium includes a non-volatile medium and a volatile medium, a movable medium and a non-movable medium, which may implement storage of information by using any method or technology. The information may be a computer-readable instruction, a data structure, a program module, or other data. Examples of a storage medium of a computer include but are not limited to a phase-change memory (PRAM), a static random access memory (SRAM), a dynamic random access memory (DRAM), or other types of random access memory (RAM), a read-only memory (ROM), an erasable programmable read-only memory (EEPROM), a flash memory or another storage technology, a compact disc read-only memory (CD-ROM), a digital versatile disc (DVD) or another optical storage, a cartridge tape, a magnetic tape, a magnetic disk storage or another magnetic storage device, or any other non-transmission medium, which may be configured to store information accessible by a computing device. According to limitations of this specification, the computer-readable medium does not include transitory computer-readable media (transitory media), for example, a modulated data signal and a modulated carrier.

It should be further noted that the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "include a/an..." does not exclude other same elements existing in the process, the method, the article, or the device that includes the element.

It can be seen from the foregoing description that embodiments of this application achieve the following technical effects:
(1) According to the control method for an aerosol generating device in this application, the ambient temperature in the proximity of the battery cell is acquired; the output power provided by the battery cell for the heating assembly is determined based on the ambient temperature; and finally, the output power is output to the heating assembly, so that the heating assembly reaches the preset preheating temperature, and the electric capacity of the battery cell can maintain the preset number of aerosol products under the output power. This application adjusts, based on the ambient temperature in the proximity of the battery cell, the output power output by the battery cell to the heating assembly, optimizes the output power of the battery cell for the ambient temperature, and resolves the problem that the output power of the battery cell is susceptible to the temperature.
(2) This application provides the aerosol generating device, including: the heating assembly, configured to heat an aerosol generating substrate to generate an aerosol; the battery cell; the temperature sensor, configured to detect the temperature of the heating assembly; and the controller, electrically connected to the battery cell and the heating assembly, and configured to perform any one of the control methods for an aerosol generating device. The device adjusts, based on the ambient temperature in the proximity of the battery cell, the output power output by the battery cell to the heating assembly, optimizes the output power of the battery cell for the ambient temperature, and resolves the problem that the output power of the battery cell is susceptible to the temperature.

The above description is merely preferred embodiments of this application and are not intended to limit this application. For a person skilled in the art, this application may have various modifications and changes. Any modification, equivalent replacement, or improvement made without departing from the spirit and principle of this application shall fall within the protection scope of this application.

## Claims

1. A control method for an aerosol generating device, applied to a controller of the aerosol generating device, wherein the aerosol generating device further comprises a battery cell and a heating assembly, the controller is electrically connected to the heating assembly and the battery cell, and the method comprises:
acquiring an ambient temperature in the proximity of the battery cell;
determining, based on the ambient temperature, output power provided by the battery cell for the heating assembly; and
outputting the output power to the heating assembly, so that the heating assembly reaches a preset preheating temperature, and an electric capacity of the battery cell can maintain a preset number of aerosol products under the output power.

2. The control method according to claim 1, wherein the determining, based on the ambient temperature, output power provided by the battery cell for the heating assembly comprises:
determining a temperature interval to which the ambient temperature belongs; and
determining, based on the belonged temperature interval, output power corresponding to the temperature interval.

3. The control method according to claim 2, wherein the determining, based on the belonged temperature interval, output power corresponding to the temperature interval comprises:
determining, when the belonged temperature interval is a first ambient temperature interval, that the output power corresponding to the temperature interval is first output power; and
determining, when the belonged temperature interval is a second ambient temperature interval, that the output power corresponding to the temperature interval is second output power, wherein
a smallest value of the first ambient temperature interval is greater than a largest value of the second ambient temperature interval, and the first output power is greater than the second output power.

4. The control method according to claim 1, wherein the outputting the output power to the heating assembly, so that the heating assembly reaches a preset preheating temperature comprises:
providing a corresponding voltage or duty cycle to the heating assembly based on the output power, so that the heating assembly reaches the preset preheating temperature.

5. The control method according to claim 1, further comprising:
acquiring a current voltage of the battery cell; and
the determining, based on the ambient temperature, output power provided by the battery cell for the heating assembly comprises:
determining, based on the ambient temperature and the current voltage, the output power provided by the battery cell for the heating assembly.

6. The control method according to claim 5, wherein the determining, based on the ambient temperature and the current voltage, the output power provided by the battery cell for the heating assembly comprises:
determining a temperature interval to which the ambient temperature belongs;
determining a voltage interval to which the current voltage belongs; and
determining corresponding output power based on the belonged temperature interval and voltage interval.

7. The control method according to claim 6, wherein the determining corresponding output power based on the belonged temperature interval and voltage interval comprises:
providing third output power for the heating assembly when the belonged temperature interval is a second ambient temperature interval and the belonged voltage interval is a first voltage interval; and
providing fourth output power for the heating assembly when the belonged temperature interval is a second ambient temperature interval and the belonged voltage interval is a second voltage interval, wherein
a smallest value of the first voltage interval is greater than a largest value of the second voltage interval, and the third output power is greater than the fourth output power.

8. The control method according to claim 6, wherein the determining corresponding output power based on the belonged temperature interval and voltage interval comprises:
providing fifth output power for the heating assembly when the belonged temperature interval is a second ambient temperature interval and the belonged voltage interval is a first voltage interval; and
providing sixth output power for the heating assembly when the belonged temperature interval is a third ambient temperature interval and the belonged voltage interval is a first voltage interval, wherein
a smallest value of the second ambient temperature interval is greater than a largest value of the third ambient temperature interval, and the fifth output power is greater than the sixth output power.

9. An aerosol generating device, comprising:
a heating assembly, configured to heat an aerosol generating substrate to generate an aerosol;
a battery cell;
a temperature sensor, configured to detect a temperature of the heating assembly; and
a controller, electrically connected to the battery cell and the heating assembly, and configured to perform the control method for an aerosol generating device according to any one of claims 1 to 7.
